# EUROPÄISCHE PATENTSCHRIFT

(11) **EP 3 567 268 B1**
(45) Veröffentlichungstag und Bekanntmachung des Hinweises auf die Patenterteilung: **10.03.2021**
(21) Anmeldenummer: 19172932.6
(22) Anmeldetag: 07.05.2019
(51) Int. Cl.: F16D 1/06, F16D 51/22, F16D 65/00, F16D 51/00, B60T 7/20, F16D 1/072

(54) **BREMSANORDNUNG UND VERFAHREN ZUR HERSTELLUNG EINER BREMSANORDNUNG**
BRAKE ASSEMBLY AND METHOD OF MANUFACTURING A BRAKE ASSEMBLY
DISPOSITIF DE FREINAGE ET PROCÉDÉ DE FABRICATION D'UN DISPOSITIF DE FREINAGE

(30) Priorität: 09.05.2018 DE 202018102601 U
(43) Veröffentlichungstag der Anmeldung: 13.11.2019
(73) Patentinhaber: Alois Kober GmbH, 89359 Kötz (DE)
(72) Erfinder: FRANK, Thomas, 89129 Setzingen (DE)
(74) Vertreter: Ernicke, Moritz

(56) Entgegenhaltungen:
- DE-A1- 4 122 420
- DE-A1-102007 042 835
- JP-A- 2000 142 010

## Beschreibung

Die Erfindung betrifft eine Bremsanordnung und ein Verfahren.

Eine solche Bremsanordnung ist aus der DE 41 22 420 A1 bekannt. Der Tragzapfen und der Bremsschild werden zusammengesteckt und drehfest über Stirnverzahnungen miteinander verbunden.

Die DE 10 2011 088 851 A1 zeigt einen Bremsträger mit einer Trägereinheit, der an einem Anschlussabschnitt mit dem Achsstummel eines Nutzfahrzeugs in einer nicht näher beschriebenen Weise verbunden werden kann.

Die DE 10 2017 104 777 A1 lehrt eine Bremsanordnung, bei der ein Bremsschild zwischen einem Achszapfen und einem Radschwinghebel mittels einer Schraubverbindung eingeklemmt wird.

Die DE 10 2007 042 835 A1 befasst sich mit der Verbindung eines Drehelements mit einer hohlen Nabe mittels einer Polygonverbindung und eines geweiteten und umgebördelten Nabenrands.

Aus der JP 2000 142 010 A ist eine Polygonverbindung zwischen einem scheibenförmigen Nabenflansch und einem Bremstrommelrand bekannt, wobei Nabenflansch am einen Rand einen festen radialen Anschlagbund und am anderen Rand einen axialen Bund aufweist, der nach Aufsetzen des Bremstrommelrands mit einer radialen Kraft umgebogen wird, so dass der Bremstrommelrand an der Verbindungsstelle beidseits axial zwischen den Bunden formschlüssig eingefasst ist.

Es ist Aufgabe der vorliegenden Erfindung, eine bessere Verbindungstechnik für eine Bremsanordnung aufzuzeigen.

Die Erfindung löst diese Aufgabe mit den Merkmalen in den unabhängigen Ansprüchen 1 (Bremsanordnung) und 13 (Verfahren zur Herstellung einer Bremsanordnung).

Die beanspruchte Verbindungstechnik für eine Bremsanordnung, d.h. die Fügeferbindung und das Verbindungsverfahren, haben verschiedene Vorteile.

Die Fügeverbindung kann in Umfangsrichtung bzgl. einer Achse des Tragzapfens drehfest sein. Sie kann dadurch die Bremskräfte übertragen. Die Fügeverbindung kann außerdem in Axialrichtung wirken. Dadurch können der Tragzapfen und der Bremsschild in ihrer gegenseitigen axialen Lage gesichert werden.

Die Pressverbindung kann an den ineinander greifenden Keilprofilen des Tragzapfens und des Bremsschilds und/oder eines ggf. am Bremsschild angeordneten Verstärkungselements, insbesondere Verstärkungsrings, angeordnet sein. Durch die Pressverbindung werden die bevorzugt umfangseitig angeordneten und mit einer radialen Richtungskomponente ineinander greifenden Keilprofile kraft- und formschlüssig miteinander verbunden. Der Formschluss und die Drehfestigkeit bestehen in Umfangrichtung. Durch die Pressverbindung sind die ineinander greifenden Keilprofile in Axialrichtung kraftschlüssig miteinander verbunden. Die Keilprofile haben jeweils Vorsprünge und Vertiefungen, die z.B. in einem Ring und abwechselnd angeordnet sind.

Die Verstemmung kann die Haltewirkung der Pressverbindung unterstützen. Die Unterstützung kann auf unterschiedliche Weise, insbesondere kraftschlüssig und/oder formschlüssig, erfolgen. Die Pressverbindung und die Verstemmung sorgen gemeinsam für eine optimale Fügeverbindung zwischen Tragzapfen und Bremsschild und für einen optimalen Halt des Bremsschilds am Tragzapfen.

In einer Variante kann durch die Verstemmung eine plastische Verformung erfolgen, die eine zusätzliche Anpresskraft auf die reibschlüssig bzw. kraftschlüssig aneinander liegenden Kontaktflächen der ineinander greifenden Keilprofile ausübt. Die Verstemmung kann dabei die Pressverbindung und deren Reib- oder Kraftschluss mit der Anpresskraft unterstützen.

Die Verstemmung kann in einer anderen Variante mittels einer plastischen Verformung an der Pressverbindung eine zusätzliche formschlüssige Verbindung von Bremsschild und Tragzapfen bilden. Diese kann in Axialrichtung des Tragzapfens wirken. Der Bremsschild und ein evtl. vorhandenes Verstärkungselement können zwischen der Verstemmung und einer rückseitigen Abstützung am Tragzapfen, z.B. einem dortigen Stützsockel, eingespannt und in Axialrichtung festgehalten werden. Diese formschlüssige axiale Verbindung kann zusätzlich zu der kraftschlüssigen Pressverbindung in Axialrichtung wirken. Bei dieser Variante kann die Verstemmung ebenfalls die vorgenannte zusätzliche Anpresskraft zur Unterstützung des Reib- oder Kraftschlusses erzeugen.

Die Bremsanordnung kann in beliebig geeigneter Weise ausgebildet sein. Vorzugsweise ist sie als Radbremse, insbesondere als Trommelbremse, ausgebildet. Alternativ sind andere Bremsgestaltungen möglich, z.B. als Scheibenbremse. Der Bremsschild hat dann eine entsprechend andere Gestaltung und Funktion.

Die Verstemmung kann an den verpressten Keilprofilen angeordnet sein. Sie kann insbesondere am einen Keilprofil angeordnet sein und das andere eingreifende Keilprofil formschlüssig übergreifen, z.B. mit einer radialen Richtungskomponente. Vorteilhafterweise kann die Verstemmung am Keilprofil des Tragzapfens angeordnet sein.

Die Verstemmung kann auch am Keilprofil des Bremsschilds oder an beiden verpressten Keilprofilen vorhanden sein.Die Verstemmungen an den Keilprofilen können wechselweise das jeweils andere Keilprofil formschlüssig übergreifen.

Ferner ist die Anordnung des zapfenseitigen Keilprofils am Umfang eines radial abstehenden Ringflanschs von Vorteil. Die radiale Verlagerung der verpressten und verstemmten Keilprofile nach außen ist günstig für eine Vergrößerung des übertragbaren Drehmoments zwischen Bremsschild und Tragzapfen bzw. Radschwinghebel.

Für die Bildung einer formschlüssig das andere Keilprofil übergreifenden Verstemmung ist eine unterschiedliche Höhe der ineinander greifenden Keilprofile von Vorteil. Die Verstemmung kann an dem axial in der Höhe überstehenden Keilprofil angeordnet sein, wobei durch die plastische Verformung an dem Höhenüberstand und die seitliche Materialverdrängung über das andere Keilprofil hinweg der besagte Übergriff und die formschlüssige Verbindung gebildet werden können.

Die Verstemmung kann eine oder mehrere Verstemmstellen mit jeweils einer plastisch eingeformten Kerbe und im Falle einer formschlüssigen Verbindung einem verdrängten seitlichen Überstand mit einer bevorzugt radialen Richtungskomponente aufweisen. Die Verstemmstellen bzw. Kerben befinden sich an der in Axialrichtung zum freien Tragzapfenende weisenden Oberfläche des plastisch verformten Keilprofils.

Vorzugsweise befinden sich an einem oder mehreren Vorsprüngen von einem oder beiden Keilprofilen eine Verstemmstelle. In einer Ausführungsform ist an einem oder mehreren Vorsprüngen des Keilprofils am Tragzapfen jeweils eine Verstemmstelle angeordnet.

Eine Verstemmstelle kann alternativ oder zusätzlich an einer Vertiefung eines Keilprofils vorhanden sein. Dadurch kann die Zahl und/oder Anordnung der plastisch verformten Überstände variiert werden. Es kann auch ein in Umfangsrichtung der Keilprofile umlaufender Überstand gebildet werden.

Für die Pressverbindung und die Verstemmung ist es günstig, wenn der Bremsträger einen verbreiterten Stützsockel unter dem Tragzapfen aufweist, der ein Auflager für den Bremsschild und ggf. dessen Verstärkungselement bildet. Der Bremsträger kann z.B. als Radschwinghebel ausgebildet sein.

Die Bremsanordnung kann als Radbremse, insbesondere als Trommelbremse, ausgebildet sein.

Die Bremsanordnung kann ein Bremsmittel und eine Betätigungseinrichtung aufweisen.

Die Fügeverbindung kann mit einem Werkzeug geschaffen werden, das ein bevorzugt ringförmiges Presselement für die Bildung der Pressverbindung und ein ggf. konzentrisches Stemmelement für die Bildung der Verstemmung aufweist. Das Press- und Stemmelement können getrennte Werkzeugteile oder Bestandteile eines Kombiwerkzeugs sein. Das Presselement und das Stemmelement können mit unterschiedlichen Kräften beaufschlagt werden. Außerdem können sie zeitversetzt nacheinander mit einer Druckkraft oder Presskraft beaufschlagt werden.

Bei der Bildung der Fügeverbindung wird zuerst der ggf. mit einem Verstärkungselement versehene Bremsschild mit einer Aufnahmeöffnung und einem dortigen Keilprofil auf den Tragzapfen und dessen Keilprofil in Axialrichtung gesteckt, wobei die Keilprofile in Eingriffstellung miteinander gebracht werden und anschließend mit dem Presselement in Axialrichtung verpresst werden, vorzugsweise bis zur Anlage am Stützsockel oder einer anderen axialen Abstützung am Tragzapfen. Anschließend wird mit dem Stemmelement die Verstemmung in der einen oder anderen Variante eingebracht, wobei das Verstemmelement mit einer höheren Kraft zur Bildung der plastischen Verformung beaufschlagt wird.

Es wird offenbart ein nicht weiter beanspruchtes Werkzeug zum Fügeverbinden eines Bremsschilds mit einem Tragzapfen eines Bremsträgers einer Bremsanordnung, wobei der Bremsschild und der Tragzapfen ineinander greifende Keilprofile aufweisen. Das Werkzeug weist ein ringförmiges Presselement und ein ggf. konzentrisches Stemmelement für die Bildung einer Pressverbindung und einer Verstemmung zwischen dem Tragzapfen und dem Bremsschild auf, wobei das Presselement und das Stemmelement zeitversetzt und mit unterschiedlichen axialen Presskräften betätigt werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Bremsanordnung in Form einer Trommelbremse an einem Radschwinghebel in einer perspektivischen Ansicht,
- Figur 2:: die Bremsanordnung von Figur 1 mit abgenommener Bremstrommel und einer Fügeverbindung zwischen einem Bremsschild und einem Tragzapfen der Bremsanordnung,
- Figur 3:: eine vergrößerte perspektivische Ansicht der Fügeverbindung von Figur 2 mit Blick in Axialrichtung des Tragzapfens,
- Figur 4:: eine aufgebrochene Seitenansicht der geöffneten Bremsanordnung von Figur 2 mit Darstellung einer Pressverbindung zwischen Tragzapfen und Bremsschild,
- Figur 5:: die Anordnung von Figur 4 mit Darstellung der anschließend angebrachten Verstemmung zwischen Tragzapfen und Bremsschild,
- Figur 6:: eine vergrößerte Detaildarstellung der Pressverbindung und der Verstemmung von Figur 5,
- Figur 7:: eine perspektivische Ansicht eines Bremsschilds ohne Tragzapfen,
- Figur 8:: eine perspektivische Ansicht eines Tragzapfens mit einer Verstemmung ohne Darstellung des Bremsschilds,
- Figur 9:: eine Variante der Verstemmung an einem Ringflansch des Tragzapfens in Draufsicht und
- Figur 10:: eine weitere Variante einer Verstemmung an beiden Keilprofilen in Draufsicht.

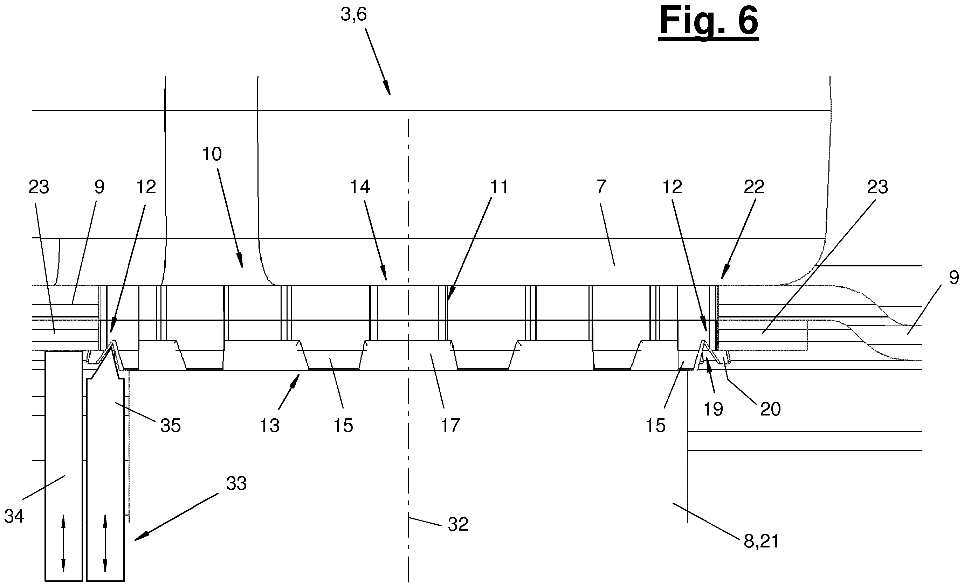

Die Erfindung betrifft eine Bremsanordnung (1) mit einer Fügeverbindung (10), die eine Pressverbindung (11) und eine Verstemmung (12) aufweist. Die Erfindung betrifft auch ein Fügeverfahren bzw. Verbindungsverfahren. Figur 6 offenbart ein nicht weiter beanspruchtes Werkzeug (33) zur Bildung der Fügeverbindung (10).

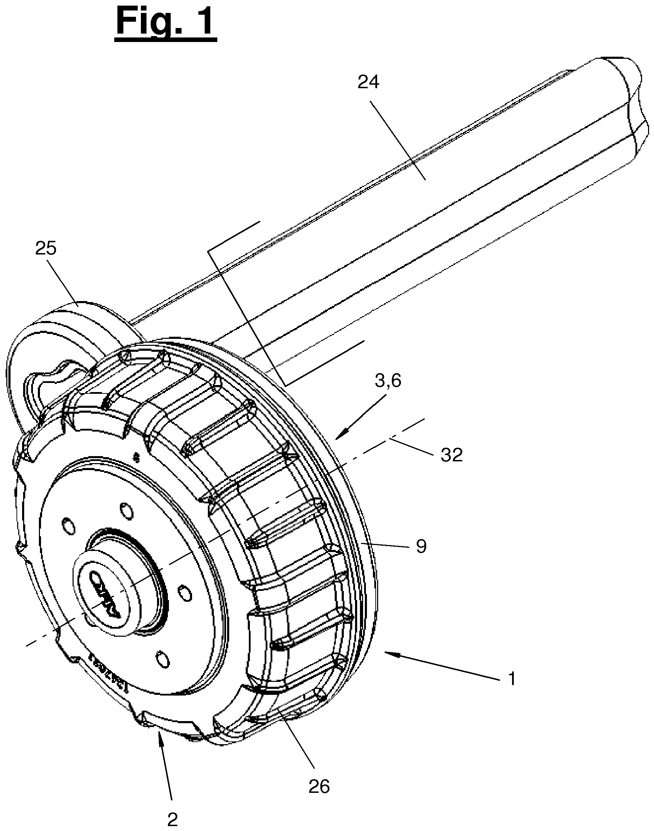

Figur 1 zeigt eine Bremsanordnung (1) in einer perspektivischen Ansicht. Die Bremsanordnung (1) ist hier z.B. als Radbremse für ein Fahrzeugrad, insbesondere als Trommelbremse ausgebildet. Alternativ kann die Radbremse in anderer Weise, z.B. als Scheibenbremse, ausgebildet sein.

Die Bremsanordnung (1) weist einen Bremsträger (3) mit einem Tragzapfen (8) auf. Der gezeigte Bremsträger (3) ist z.B. als Radschwinghebel (6) ausgebildet. Der Radschwinghebel (6) weist einen Lagerarm (24) auf, der in einen hohlen Achskörper, insbesondere ein Achsrohr, eingesteckt und drehfest oder drehbar gelagert wird. Das Achsrohr ist in Figur 1 schematisch angedeutet. Der Lagerarm (24) ist am freien Ende mit einem quer gerichteten Schwingarm (25) drehfest oder drehbar verbunden. Am freiem Ende des Schwingarms (25) sind ein Stützsockel (7) und ein quer abstehender Tragzapfen (8) mit einer zentralen Achse (32) angeordnet. In einer Abwandlung kann der Bremsträger (3) anders ausgebildet sein. Der Tragzapfen (8) kann z.B. direkt auf einem Achskörper angeordnet sein.

Die Bremsanordnung (1) weist ferner einen Bremsschild (9), ein Bremsmittel (4) und eine Betätigungseinrichtung (5) auf. Das Bremsmittel (4) wird bei der gezeigten Trommelbremse von Bremsbacken (28) und einer Bremstrommel (26) gebildet, die mittels eines Drehlagers (27) am Tragzapfen (8) drehbar gelagert werden kann. Frontseitig weist die Bremstrommel (26) eine Nabe mit mehreren Schraubbohrungen zur Befestigung einer Radfelge auf. Die Betätigungseinrichtung (5) wird bei der gezeigten Trommelbremse von einer Spanneinrichtung (29) und einer diametral zur Achse (32) gegenüber liegenden Abstützung (30) gebildet, die mit den Bremsbacken (28) zusammenwirken. In der gezeigten Ausführungsform ist außerdem eine Rückfahrautomatik (31) an der Abstützung (30) vorhanden, die ebenfalls mit den Bremsbacken (28) zusammenwirkt und bei Rückwärtsfahrt diese unter Minderung oder Aufhebung der Abstützwirkung sowie der Bremswirkung ausweichen lässt.

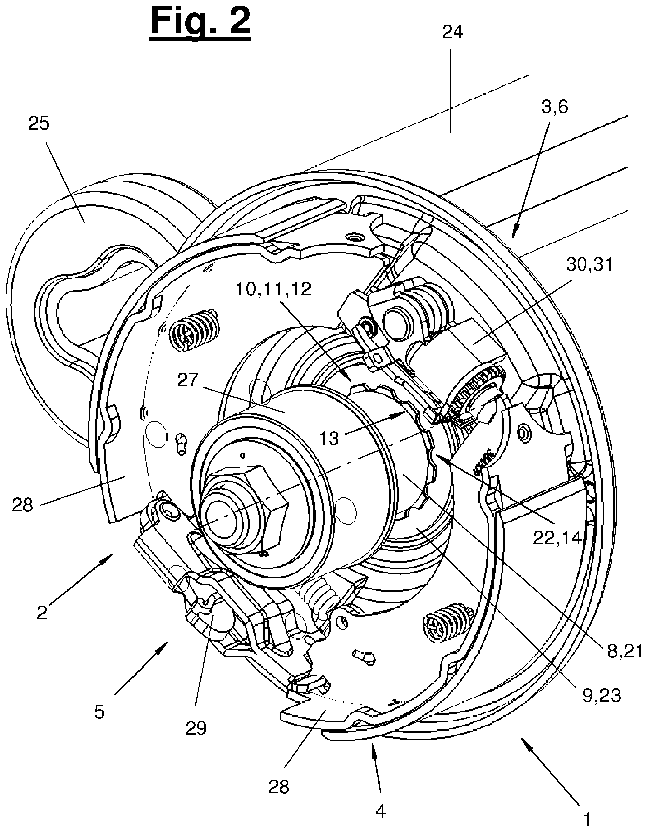

Figur 2 zeigt die Bremsanordnung (1) in perspektivischer Ansicht mit abgenommener Bremstrommel (26). Hier sind das Bremsmittel (4) und die Betätigungseinrichtung (5) sowie der Tragzapfen (8) und der Bremsschild (9) ersichtlich. Am Bremsschild (9) sind das Bremsmittel (4) und die Betätigungseinrichtung (5) angeordnet und gelagert.

Der Bremsschild (9) ist mit dem Tragzapfen (8) durch eine Fügeverbindung (10) verbunden. Dies ist vorzugsweise eine umfangseitige Fügeverbindung (10) am Schaft (21) des Tragzapfens (8) und an einer zentralen Öffnung (22) am Bremsschild (9). Die Fügeverbindung (10) ist in Figur 2 bis 6 näher dargestellt. Der Bremsschild (9) liegt in Fügestellung am Stützsockel (7) oder einer anderen axialen Abstützung am Tragzapfen (8) an.

Die Fügeverbindung (10) bewirkt eine drehfeste Verbindung von Tragzapfen (8) und Bremsschild (9) in Umfangsrichtung um die Achse (32). Die Fügeverbindung (10) kann außerdem eine kraftschlüssige und/oder formschlüssige Verbindung von Tragzapfen (8) und Bremsschild (9) in Längsrichtung der Achse (32) bewirken.

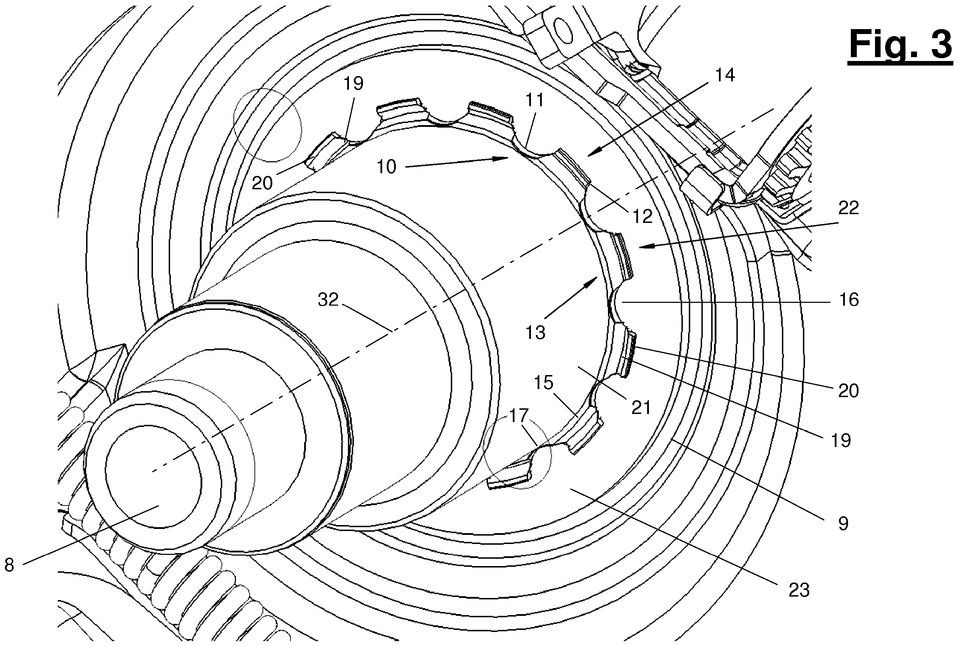

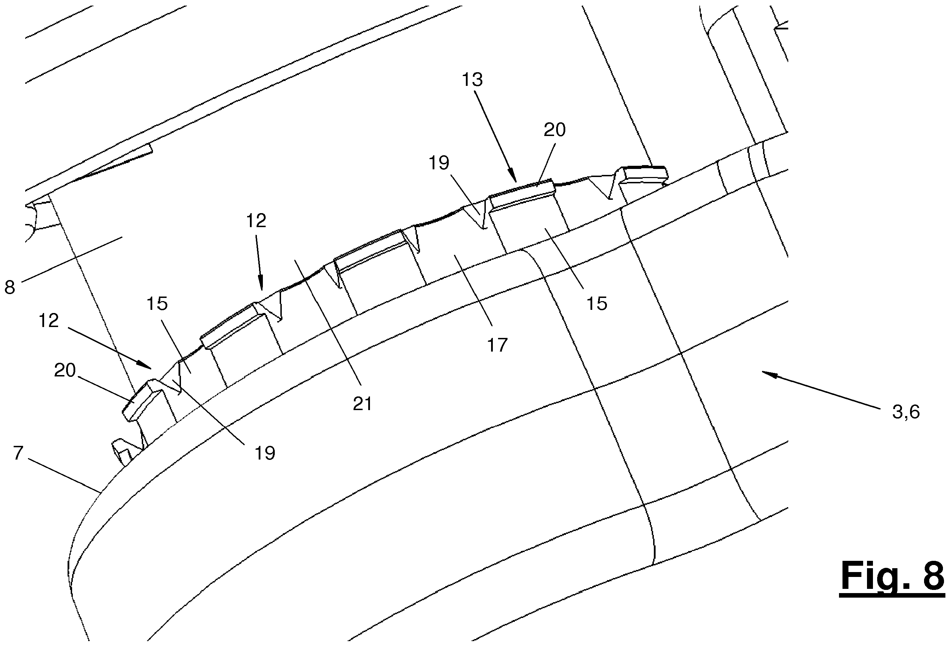

Der Tragzapfen (8) und der Bremsschild (9) weisen ineinander greifende Keilprofile (13,14) auf, die jeweils mit einer radialen Richtungskomponente wechselweise ineinander greifende Vorsprünge (15,16) und Vertiefungen (17,18) aufweisen. Die Vorsprünge (15,16) und Vertiefungen (17,18) können eine zumindest bereichsweise gerundete Wellenform oder eine eckige Zahn- oder Keilform aufweisen. Das Keilprofil (13) ist am unteren Ende des Tragzapfens (8) an beliebig geeigneter Stelle angeordnet. Vorzugsweise befindet es sich außen am Umfang des Schafts (21) des Tragzapfens (8). Die Vorsprünge (15) ragen mit einer radialen Richtungskomponente über den Schaftumfang nach außen. Figur 3 und 8 verdeutlichen diese Anordnung.

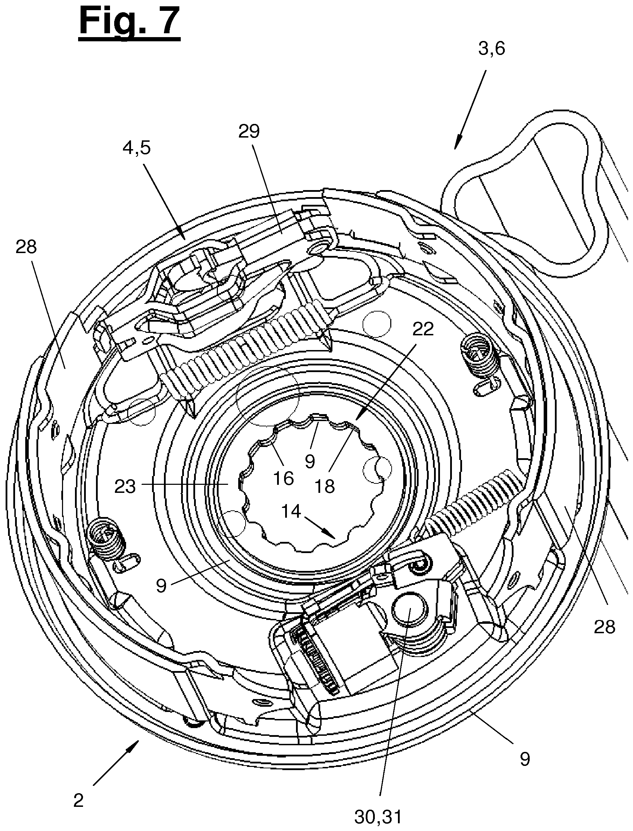

Der Bremsschild (9) weist eine z.B. kreisrunde Aufnahmeöffnung (22) für den Tragzapfen (8) auf und wird mit dieser auf den z.B. zylindrischen Tragzapfen (8) axial aufgesteckt. Die zentrale Aufnahmeöffnung (22) weist am Öffnungsrand das Keilprofil (14) auf. Am Bremsschild (9) kann außerdem ein Verstärkungselement (23), z.B. ein Verstärkungsring, im Bereich der Aufnahmeöffnung (22) lose oder mit fester Verbindung angeordnet sein. Das Verstärkungselement (22) kann z.B. in Axialrichtung (32) zum freien Zapfenende gesehen auf dem Bremsschild (8) angeordnet sein. Das Verstärkungselement (22) kann an seiner Aufnahmeöffnung das gleiche Keilprofil (14) wie der Bremsschild (9) aufweisen. Figur 7 zeigt diese Anordnung.

Die Keilprofile (13,14), können komplementär ausgebildet sein, wobei die Vorsprünge (15) des einen Keilprofils (13) die Vertiefungen (18) des anderen Keilprofils (14) bevorzugt vollständig ausfüllen und umgekehrt. Beim axialen Aufstecken des Bremsschilds (9) und des evtl. vorhandenen Verstärkungselements (23) werden die Keilprofile (13,14) miteinander in Axialrichtung in Eingriff gebracht.

Die Fügeverbindung (10) weist eine Pressverbindung (11) und zusätzlich eine Verstemmung (12) an der Pressverbindung (11) auf. Die Pressverbindung (11) ist an den ineinander greifenden Keilprofilen (13,14) angeordnet. Die Verstemmung (12) unterstützt die Haltewirkung der Pressverbindung (11). In der gezeigten Ausführungsform wirkt die Verstemmung (12) formschlüssig und bildet eine axiale Verbindung von Bremsschild (9) und Tragzapfen (8). Die Verstemmung (12) kann zusätzlich oder alternativ eine zusätzliche, z.B. quer zur Achse (32) gerichtete Anpresskraft bewirken zur Unterstützung des Reibschlusses und der kraftschlüssigen Verbindung zwischen den miteinander im Eingriff stehenden axial gerichteten Wänden der Keilprofile (13,14) bzw. ihrer Vorsprünge (15,16) und Vertiefungen (17,18). In Axialrichtung (32) haben die Wände der Keilprofile (13,14) bevorzugt eine gerade und achsparallele Erstreckung.

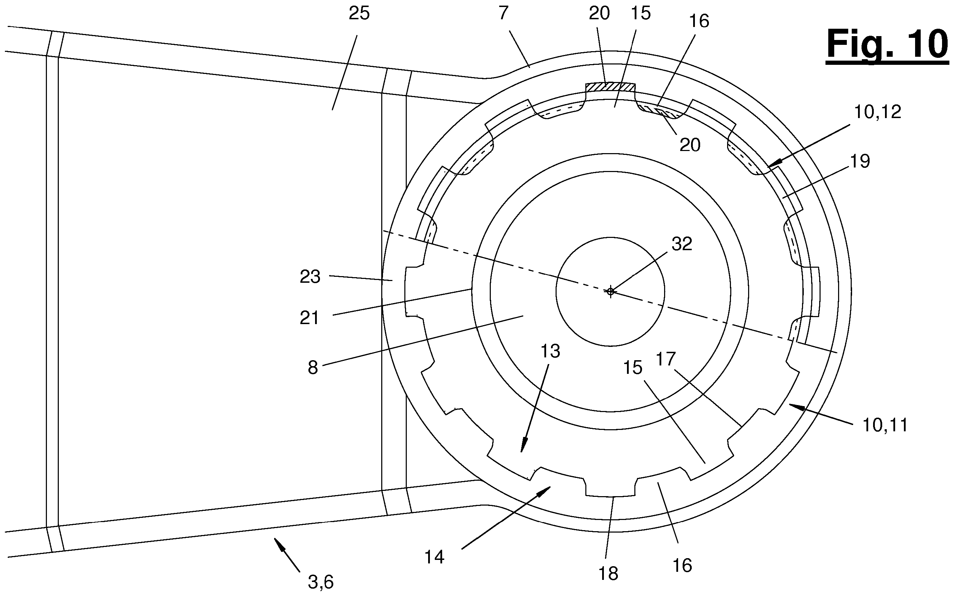

Die Verstemmung (12) ist an den verpressten Keilprofilen (13,14) angeordnet. Sie ist dabei z.B. am einen Keilprofil (13) angeordnet und übergreift formschlüssig das andere Keilprofil (14). Vorzugsweise ist die Verstemmung (12) am Keilprofil (13) des Tragzapfens (8) angeordnet und übergreift das Keilprofil (14) des Bremsschilds (9) und ggf. Verstärkungselements (23). Die Anordnung und Eingriffswirkung kann auch umgekehrt oder in einer anderen Variante gemäß Figur 10 wechselweise vorhanden sein.

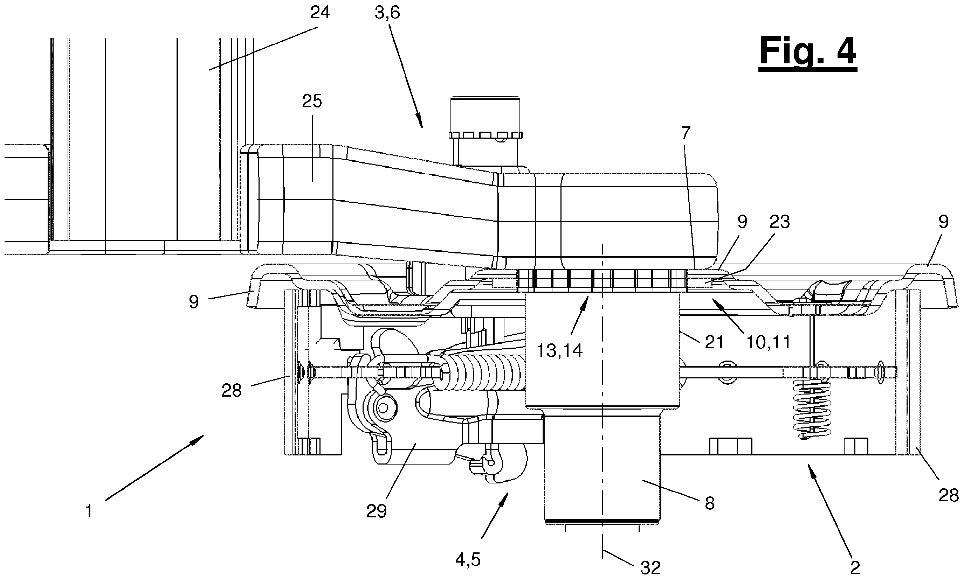

Wie Figur 4 bis 5 verdeutlichen, können die ineinander greifenden Keilprofile (13,14) in Axialrichtung (32) unterschiedliche Höhen aufweisen. Die Verstemmung (12) ist an dem axial in der Höhe überstehenden Keilprofil (13) angeordnet. Dies ist bevorzugt das Keilprofil (13) des Tragzapfens (8). Die Verstemmung (12) übergreift dabei den Bremsschild (9) und das ggf. vorhandene Verstärkungselement (23) und spannt diese gegen den Stützsockel (7) unter Bildung der in Axialrichtung (32) wirksamen formschlüssigen Verbindung.

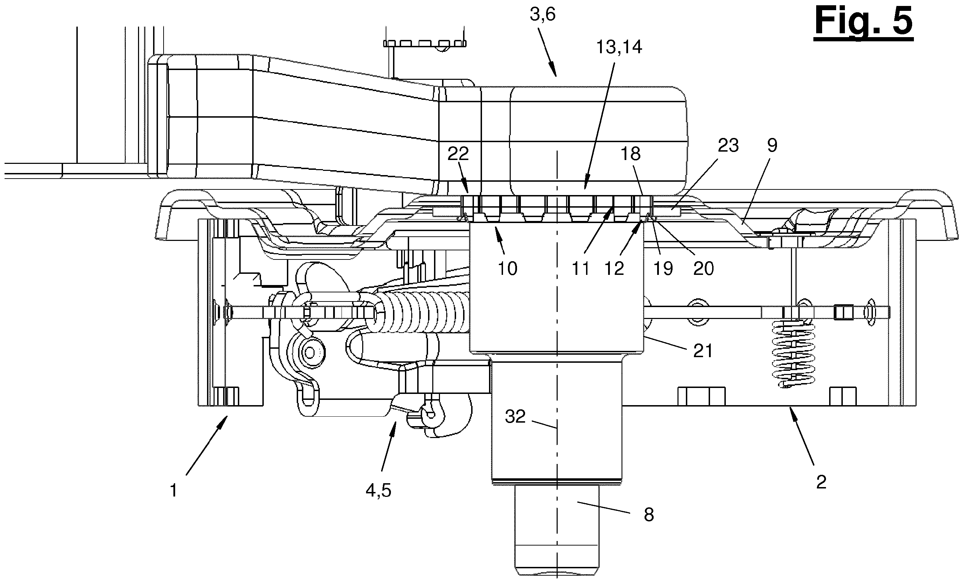

Die Verstemmung (12) weist eine oder mehrere Verstemmstellen mit jeweils einer Kerbe (19) auf. In dem gezeigten Ausführungsbeispiel ist zusätzlich ein bei Einbringung der Kerbe (19) und der formschlüssigen Verformung verdrängter seitlicher Überstand (20) vorhanden. Dieser hat eine radiale Richtungskomponenten und übergreift kragenartig das andere Keilprofil (14). Figur 5, 6 und 8 verdeutlichen diese Ausbildung der Verstemmung (12). An einer Verstemmstelle können auch mehrere Kerben (19) und ggf. Überstände (20) angeordnet sein.

Die Verstemmung (12) ist vorzugsweise an den Vorsprüngen (15) des einen Keilprofils (13), insbesondere des Keilprofils (13) am Tragzapfen (8) angeordnet. Die Verstemmung (12) ist an der in Axialrichtung (32) weisenden Oberseite des oder der betreffenden Vorsprünge (15) angeordnet. Dies ist die vom Stützsockel (17) weg bzw. zum freien Zapfenende hin weisenden Seite.

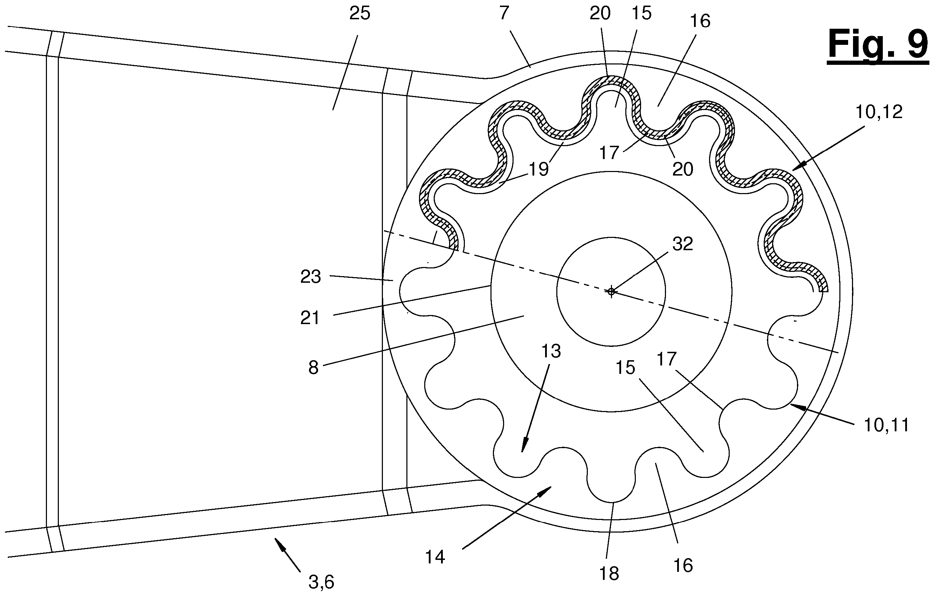

Bei der Verstemmung wird mit einem nachfolgend beispielhaft erläuterten Werkzeug (33) und mit hoher axialer Presskraft die Kerbe (19) an der besagten Oberseite als dortige Vertiefung plastisch eingeformt. Die Kerbe (19) kann die in Figur 3 bis 8 gezeigte längliche gerade oder gebogene Form haben, die sich z.B. in Umfangsrichtung zur Achse (32) oder tangential erstreckt. Figur 9 zeigt eine Variante mit einer wellenförmigen und in Umfangsrichtung zur Achse (32) umlaufenden Verstemmstelle und Kerbe (19). Bei Einpressen der Kerbe (19) wird durch die plastische Verformung Material des Vorsprungs (15) zur Seite verdrängt.

Bei einer nicht dargestellten Variante einer konischen Kerbe (19) wird durch die Verformung die besagte Druckkraft erzeugt, die gegen die im Kopfbereich des Vorsprungs (15) anliegende Vertiefung (18) und gegen die Seitenwände der benachbarten Vorsprünge (16) am anderen Keilprofil (14) wirkt und den Reibschluss verstärkt. Die Kerbe kann kegelförmig sein.

Bei der in Figur 3 bis 8 gezeigten länglichen Kerbe (19) wird eine größere Materialmenge des Vorsprungs (15) mit einer radialen Richtungskomponente zur Seite weg verdrängt. Durch den Überstand in der axialen Höhe gleitet das verdrängte Material über den Bremsschild (9) bzw. das Verstärkungselement (23) und bildet den besagten Überstand (20) und den formschlüssigen Übergriff. Der Übergriff befindet sich im Bereich der jeweiligen korrespondierenden Vertiefung (18) des anderen Keilprofils (14). Die Kerbe (19) kann sich über die gesamte Breite oder über einen Teil der Breite der Verstemmstelle bzw. des jeweiligen Vorsprungs (15) erstrecken. Figur 8 zeigt die Vorsprünge (15) mit den Kerben (18) und den kragenartigen Überständen (20) .

Bei der Ausführungsform von Figur 3 bis 8 sind vereinzelte längliche Kerben (19) und Überstände (20) an Vorsprüngen (15) eines Keilprofils (3) angeordnet. In der Variante von Figur 9 ist eine umfangseitig umlaufende Kerbe (19) vorhanden, die an den Vorsprüngen (15) und auch an den Vertiefungen (17) eines Keilprofils (13) angeordnet ist. Sie ist an den zum freien Zapfenende weisenden Oberseiten der Vorsprünge (15) und Vertiefungen (17) eingepresst. Die Kerbe (19) folgt der Profilkontur des Keilprofils (13) und kann eine entsprechende umlaufende Wellenkontur haben. Die Kerbe (19) bildet einen ebenfalls umfangseitig umlaufenden, plastisch verformten Überstand (20). Dieser übergreift mit radialer Richtungskomponente die Vertiefungen (18) und Vorsprünge (16) am Bremsschild (9) und ggf. am Verstärkungselement (23). Der Überstand (20) ist der Übersichtlichkeit halber schraffiert dargestellt.

Bei der Variante von Figur 9 ist das Keilprofil (13) am Außenumfang eines radial auskragenden Ringflanschs (36) des Tragzapfens (8) mit radialem Abstand vom Zapfenschaft (21) angeordnet. Die eine Bildhälfte am Tragzapfen (8) zeigt die im Eingriff stehenden Keilprofile (13,14) des Tragzapfens (8) und des Verstärkungselement (23) bzw. des Bremsschilds (9) in der vorerst nur verpressten Stellung, bzw. Pressverbindung (11). In der anderen Bildhälfte ist die Fügeverbindung (10) mit der Verstemmung (12) dargestellt. Der Bremsschild (9) ist der Übersicht halber nicht dargestellt.

Die an der Fügeverbindung (10) beteiligten Tragzapfen (8), Bremsschild (9) und ggf. Verstärkungselement (23) bestehen aus einem geeigneten Material. Dies kann ein metallischer Werkstoff, insbesondere Stahl und/oder Messing oder dgl. sein. Das bei der Verstemmung verformte Keilprofil (13,14) besteht aus einem duktilen und plastisch verformbaren Material, insbesondere Metall.

Zur Herstellung der Fügeverbindung (10) wird der Bremsschild (9) und ggf. das aufgesetzte Verstärkungselement (23) vom freien Zapfenende her auf den Tragzapfen (8) aufgeschoben und dabei in Umfangsrichtung derart angeordnet, dass die Keilprofile (13,14) eingriffsfähig und in Axialrichtung miteinander verpressbar aufeinander liegen. Anschließend wird mit einem Werkzeug (33) in Axialrichtung auf den Bremsschild (9) und ggf. das Verstärkungselement (23) mit einer ausreichenden Kraft gedrückt. Das Aufstecken und Verpressen erfolgen in der gleichen axialen Richtung vom freien Zapfenende her. Hierdurch kommen die Keilprofile (13,14) in gegenseitigen Eingriff. Ferner wird der Bremsschild (9) in Anlage mit dem verbreiterten Stützsockel (7) unter den Tragzapfen (8) gebracht. Der Stützsockel (7) bildet ein Auflager für den Bremsschild (9). Bei der gezeigten Ausführungsform ragen die Vorsprünge (15) des Keilprofils (13) am Tragzapfen (8) in Axialrichtung zum freien Zapfenende hin über den Bremsschild (9) bzw. das Verstärkungselement (23) hinaus.

Nach oder während der Schaffung der Pressverbindung (11) wird die Verstemmung (12) mit der plastischen Einformung der ein oder mehreren Kerben (19) und ggf. Verdrängung der Überstände (20) gebildet. Das Verstemmen erfolgt ebenfalls in der gleichen axialen Richtung vom freien Zapfenende her. Der Bremsschild (9) und ggf. das Verstärkungselement (23) werden dabei zwischen dem Stützsockel (7) und den ein oder mehreren radial übergreifenden Überständen (20) eingespannt.

Figur 6 zeigt schematisch und in abgebrochener Darstellung am linken Bildrand ein beispielhaftes Werkzeug (33) zur Bildung der Fügeverbindung (10). Das Werkzeug (33) weist ein Presselement (34) auf, welches die Pressverbindung (11) bewirkt und gegen den Bremsschild (9) und ggf. das Verstärkungselement (23) in axialer Richtung (32) angedrückt wird. Das Presselement (34) kann z.B. ringförmig ausgebildet sein und kann den Tragzapfen (9) mit ausreichendem seitlichen Abstand umgeben. Das Presselement (34) kann als geschlossener oder in Umfangsrichtung stellenweise unterbrochener Ring ausgeführt sein. Es wirkt außerhalb des Keilprofils (13) am Tragzapfen (8).

Zur Bildung der Verstemmung (12) weist das Werkzeug (33) ein Stemmelement (35) auf, welches an der Frontseite einen geeignet geformten Druckstempel zur Einbringung der ein oder mehreren Kerben (19) am Keilprofil (13) des Tragzapfens (8) aufweist. Der Druckstempel hat an seiner Stirnseite die gezeigte im Querschnitt keilförmige Stempelkontur oder Prägekontur. Diese kann entsprechend der Kerbenanordnung in Umfangrichtung unterbrochen oder umlaufend angeordnet und ggf. wellenförmig profiliert sein. Das Stemmelement (35) kann ebenfalls eine umfangseitig geschlossene oder unterbrochene Ringform aufweisen. Das Stemmelement (35) kann innerhalb des Presselements (34) angeordnet sein.

Die besagten Ringformen können an die Umfangsgeometrie des Tragzapfens (8) angepasst sein. Sie sind z.B. kreisrund. Sie können alternativ eine andere, z.B. ovale oder prismatische Gestalt haben.

Das Presselement (34) und das Stemmelement (35) können in Axialrichtung (32) von einem geeigneten Antrieb des Werkzeugs (33) vor- und zurückbewegt werden. Hierbei kann zum Verpressen und Verstemmen die jeweils erforderliche axiale Vorschub- oder Druckkraft aufgebracht werden. Zum Verstemmen wird eine deutlich höhere axiale Kraft als zum Verpressen aufgebracht. Das Presselement (34) und das Stemmelement (35) können einzeln beweglich gelagert sein. Sie können alternativ zu einem Kombiwerkzeug verbunden und ggf. auch aneinander gelagert sein. Sie können einzeln oder gemeinsam angetrieben sein.

Abwandlungen der gezeigten Ausführungsform sind in verschiedener Weise möglich. Die Verstemmung (12) kann alternativ am Keilprofil (14) des Bremsschilds (9) bzw. des ggf. vorhandenen Verstärkungselements (23) gebildet werden. Das Keilprofil (13) am Tragzapfen (8) kann dabei eine entsprechende Ausbildung haben, um auch den seitlich verdrängten Überstand (20) mit dem in Axialrichtung wirkenden Übergriff aufnehmen zu können. Das Keilprofil (13) kann hierfür z.B. an einem Ringflansch (36) mit radialem Abstand der Vertiefungen (17) vom Zapfenschaft (21) angeordnet sein. Dies gilt auch für die Variante von Figur 9.

In einer weiteren Variante kann eine Verstemmung (12) sowohl am Keilprofil (13), als auch am Keilprofil (14) angebracht werden. Figur 10 zeigt eine solche Ausführungsform in einer Draufsicht auf den Tragzapfen (8) und das Verstärkungselement (23) ohne Darstellung des Bremsschilds (9).

Das Keilprofil (13) ist umfangseitig an dem besagten auskragenden Ringflansch (36) des Tragzapfens (8) mit radialem Abstand vom Zapfenschaft (21) angeordnet. Die eine Bildhälfte am Tragzapfen (8) zeigt die im Eingriff stehenden Keilprofile (13,14) des Tragzapfens (8) und des Verstärkungselement (23) bzw. des Bremsschilds (9) in der vorerst nur verpressten Stellung, bzw. Pressverbindung (11). In der anderen Bildhälfte ist die Fügeverbindung (10) mit der Verstemmung (12) dargestellt.

Die axiale Verstemmung (12) wirkt auf beide Keilprofile (13,14). Sie bildet wie in den anderen Ausführungsbeispielen z.B. die länglichen koaxial gebogenen oder tangentialen Kerben (19) und die mit radialer Richtungskomponente seitlich verdrängten, plastisch verformten Überstände (20). Die Überstände (20) sind an den zum freien Zapfenende weisenden Oberseiten der Vorsprünge (15,16) des Tragzapfens (8) und des Verstärkungselement (23) bzw. des Bremsschilds (9) angeordnet. Sie ragen abwechselnd mit radialer Richtungskomponente nach außen und nach innen zur Zapfenachse (32). Die Überstände (20) übergreifen axial die Vertiefungen (17,18) des jeweils anderen Keilprofils (13,14). Das Stemmelement (35) kann eine ringförmige geschlossene Stemmkontur oder Prägekontur gaben. Zwischen den Vorsprüngen (15,16) und den Vertiefungen (17,18) können axiale Höhenunterschiede bestehen.

In einer weiteren Abwandlung können der oder die seitlich verdrängten, insbesondere radialen, Überstände (20) und der in Axialrichtung (32) wirkende formschlüssige Übergriff vom einen Keilprofil (13,14) auf das andere Keilprofil (14,13) entfallen. In diesem Fall kann z.B. eine konische bzw. kegelförmige Kerbe (19) an die jeweilige Verstemmstelle durch plastische Verformung eingebracht werden.

Ferner ist es möglich, dass die Keilprofile (13,14) in Axialrichtung die gleiche Höhe haben, wobei der vorbeschriebene axiale Höhenüberstand entfällt.

Andererseits kann ein axialer Höhenüberstand auch durch gleiche Wandhöhen und eine in Axialrichtung versetzte Anordnung der Keilprofile (13,14) gebildet werden.

Die gezeigte Bremsanordnung (1) ist z.B. für ein Fahrzeug und ein Fahrzeugrad vorgesehen. Sie kann alternativ zum Bremsen anderer Gegenstände eingesetzt und entsprechend ausgebildet werden.

### BEZUGSZEICHENLISTE

- 1: Bremsanordnung
- 2: Radbremse, Trommelbremse
- 3: Bremsträger
- 4: Bremsmittel
- 5: Betätigungseinrichtung
- 6: Radschwinghebel
- 7: Stützsockel
- 8: Tragzapfen
- 9: Bremsschild
- 10: Fügeverbindung
- 11: Pressverbindung
- 12: Verstemmung
- 13: Keilprofil am Tragzapfen
- 14: Keilprofil am Bremsschild
- 15: Vorsprung am Tragzapfen
- 16: Vorsprung am Bremsschild
- 17: Vertiefung am Tragzapfen
- 18: Vertiefung am Bremsschild
- 19: Kerbe
- 20: Überstand
- 21: Schaft
- 22: Aufnahmeöffnung
- 23: Verstärkungselement, Verstärkungsring
- 24: Lagerarm
- 25: Schwingarm
- 26: Bremstrommel
- 27: Drehlager
- 28: Bremsbacke
- 29: Spanneinrichtung
- 30: Abstützung
- 31: Rückfahrautomatik
- 32: Achse, Axialrichtung
- 33: Werkzeug
- 34: Presselement
- 35: Stemmelement
- 36: Ringflansch

## Patentansprüche

1. Bremsanordnung mit einem Bremsschild (9) und einem Bremsträger (3) mit einem Tragzapfen (8), wobei der Bremsschild (9) und der Tragzapfen (8) durch eine bevorzugt umfangseitige Fügeverbindung (10) drehfest miteinander verbunden sind, wobei der Tragzapfen (8) und der Bremsschild (9) ineinander greifende Keilprofile (13,14) aufweisen, **dadurch gekennzeichnet, dass** die Fügeverbindung (10) eine dortige Pressverbindung (11) und zusätzlich eine Verstemmung (12) an der Pressverbindung (11) aufweist.

2. Bremsanordnung nach Anspruch 1, **dadurch gekennzeichnet, dass** die Keilprofile (13,14) wechselseitig mit einer radialen Richtungskomponente bezüglich der Zapfenachse ineinander greifende Vorsprünge (15,16) und Vertiefungen (17,18) aufweisen.

3. Bremsanordnung nach Anspruch 1 oder 2, **dadurch gekennzeichnet, dass** die Verstemmung (12) an der Pressverbindung (11) eine zusätzliche formschlüssige bevorzugt axiale Verbindung von Bremsschild (9) und Tragzapfen (8) bildet.

4. Bremsanordnung nach Anspruch 1, 2 oder 3, **dadurch gekennzeichnet, dass** die Verstemmung (12) an den verpressten Keilprofilen (13,14) angeordnet ist, wobei die Verstemmung (12) am einen Keilprofil (13,14) oder an beiden Keilprofilen (13,14) angeordnet ist und das jeweils andere Keilprofil (14,13) formschlüssig übergreift.

5. Bremsanordnung nach einem der vorhergehenden Ansprüche, **dadurch gekennzeichnet, dass** die ineinander greifenden Keilprofile (13,14) in Axialrichtung (32) des Tragzapfens (8) unterschiedliche Höhen aufweisen, wobei die Verstemmung (12) an dem axial in der Höhe überstehenden Keilprofil (13,14) angeordnet ist.

6. Bremsanordnung nach einem der vorhergehenden Ansprüche, **dadurch gekennzeichnet, dass** ein Keilprofil (13) am Tragzapfen (8) und ein Keilprofil (14) am Rand einer den Tragzapfen (8) umgebenden Aufnahmeöffnung (22) des Bremsschilds (9) und ggf. eines dortigen Verstärkungsrings (23) angeordnet ist.

7. Bremsanordnung nach einem der vorhergehenden Ansprüche, **dadurch gekennzeichnet, dass** die Verstemmung (12) eine oder mehrere Verstemmstellen mit jeweils einer Kerbe (19) und ggf. einem verdrängten seitlichen, insbesondere radialen, Überstand (20) aufweist.

8. Bremsanordnung nach Anspruch 7, **dadurch gekennzeichnet, dass** die Verstemmstellen bzw. Kerben (19) sich an der in Axialrichtung zum freien Tragzapfenende weisenden Oberfläche des plastisch verformten Keilprofils (13,14) befinden.

9. Bremsanordnung nach einem der vorhergehenden Ansprüche, **dadurch gekennzeichnet, dass** an einem oder mehreren Vorsprüngen (15,16) jeweils eine Verstemmstelle angeordnet ist.

10. Bremsanordnung nach einem der vorhergehenden Ansprüche, **dadurch gekennzeichnet, dass** die Verstemmung (12) an einem oder mehreren Vorsprüngen (15) und ggf. auch Vertiefungen (17) des Tragzapfens (8) angeordnet ist.

11. Bremsanordnung nach einem der vorhergehenden Ansprüche, **dadurch gekennzeichnet, dass** der Bremsträger (3) einen verbreiterten Stützsockel (7) unter dem Tragzapfen (8) aufweist, der ein Auflager für den Bremsschild (9) bildet.

12. Bremsanordnung nach einem der vorhergehenden Ansprüche, **dadurch gekennzeichnet, dass** der Bremsträger (3) als Radschwinghebel (6) ausgebildet ist.

13. Verfahren zur Herstellung einer Bremsanordnung (1) mit einem Bremsschild (9) und einem Bremsträger (3) mit einem Tragzapfen (8), wobei der Bremsschild (9) und der Tragzapfen (8) durch eine bevorzugt umfangseitige Fügeverbindung (10) drehfest miteinander verbunden werden, wobei der Tragzapfen (8) und der Bremsschild (9) ineinander greifende Keilprofile (13,14) aufweisen, **dadurch gekennzeichnet, dass** die Fügeverbindung (10) von einer Pressverbindung (11) zwischen den Keilprofilen (13,14) und zusätzlich von einer Verstemmung (12) an der Pressverbindung (11) gebildet wird.

14. Verfahren nach Anspruch 13, **dadurch gekennzeichnet, dass** die Fügeverbindung (10) mit einem Werkzeug (33) geschaffen wird, das ein bevorzugt ringförmiges Presselement (34) für die Bildung der Pressverbindung (11) und ein ggf. konzentrisches Stemmelement (32) für die Bildung der Verstemmung (12) aufweist, wobei das Presselement (34) und das Stemmelement (35) mit unterschiedlichen Kräften beaufschlagt werden können und zeitversetzt nacheinander mit einer Druckkraft oder Presskraft beaufschlagt werden können.

15. Verfahren nach Anspruch 13 oder 14, **dadurch gekennzeichnet, dass** zuerst der ggf. mit einem Verstärkungselement (23) versehene Bremsschild (9) mit einer Aufnahmeöffnung (22) und einem dortigen Keilprofil (14) auf den Tragzapfen (8) und dessen Keilprofil (13) in Axialrichtung vom freien Zapfenende her gesteckt wird, wobei die Keilprofile (13,14) in Eingriffstellung miteinander gebracht werden und anschließend mit einem Presselement (34) in Axialrichtung verpresst werden, vorzugsweise bis zur Anlage an einem Stützsockel (7) oder einer anderen axialen Abstützung am Tragzapfen (8), wobei anschließend mit einem Stemmelement (35) die Verstemmung (12) eingebracht wird, wobei das Stemmelement (35) mit einer höheren Kraft zur Bildung der plastischen Verformung beaufschlagt wird.

## Claims

1. Brake arrangement having a brake shield (9) and a brake anchor plate (3) with a supporting pin (8), wherein the brake shield (9) and the supporting pin (8) are connected in a rotationally fixed manner to each other by a preferably circumferential joining connection (10), wherein the supporting pin (8) and the brake shield (9) have intermeshing wedge profiles (13, 14), **characterized in that** the joining connection (10) has a press connection (11) there and additionally a caulking (12) at the press connection (11).

2. Brake arrangement according to Claim 1, **characterized in that** the wedge profiles (13, 14) have projections (15, 16) and depressions (17, 18) intermeshing alternately with a radial direction component with respect to the pin axis.

3. Brake arrangement according to Claim 1 or 2, **characterized in that** the caulking (12) at the press connection (11) forms an additional, form-fitting, preferably axial connection of brake shield (9) and supporting pin (8).

4. Brake arrangement according to Claim 1, 2 or 3, **characterized in that** the caulking (12) is arranged on the compressed wedge profiles (13, 14), wherein the caulking (12) is arranged on the one wedge profile (13, 14) or on both wedge profiles (13, 14) and engages in a form-fitting manner over the respective other wedge profile (14, 13).

5. Brake arrangement according to one of the preceding claims, **characterized in that** the intermeshing wedge profiles (13, 14) have different heights in the axial direction (32) of the supporting pin (8), wherein the caulking (12) is arranged on the wedge profile (13, 14) protruding axially in height.

6. Brake arrangement according to one of the preceding claims, **characterized in that** one wedge profile (13) is arranged on the supporting pin (8) and one wedge profile (14) is arranged on the edge of a receiving opening (22) of the brake shield (9), the receiving opening surrounding the supporting pin (8), and optionally of a reinforcing ring (23) there.

7. Brake arrangement according to one of the preceding claims, **characterized in that** the caulking (12) has one or more caulking points each having a notch (19) and optionally a displaced lateral, in particular radial, protrusion (20).

8. Brake arrangement according to Claim 7, **characterized in that** the caulking points or notches (19) are located on that surface of the plastically deformed wedge profile (13, 14) which faces the free supporting pin end in the axial direction.

9. Brake arrangement according to one of the preceding claims, **characterized in that** a respective caulking point is arranged on one or more projections (15, 16) .

10. Brake arrangement according to one of the preceding claims, **characterized in that** the caulking (12) is arranged on one or more projections (15) and optionally also depressions (17) of the supporting pin (8).

11. Brake arrangement according to one of the preceding claims, **characterized in that** the brake anchor plate (3) has a widened support base (7) below the supporting pin (8), the support base forming a support for the brake shield (9).

12. Brake arrangement according to one of the preceding claims, **characterized in that** the brake anchor plate (3) is in the form of an oscillating wheel lever (6) .

13. Method for producing a brake arrangement (1) having a brake shield (9) and a brake anchor plate (3) with a supporting pin (8), wherein the brake shield (9) and the supporting pin (8) are connected in a rotationally fixed manner to each other by a preferably circumferential joining connection (10), wherein the supporting pin (8) and the brake shield (9) have intermeshing wedge profiles (13, 14), **characterized in that** the joining connection (10) is formed by a press connection (11) between the wedge profiles (13, 14) and additionally by a caulking (12) at the press connection (11).

14. Method according to Claim 13, **characterized in that** the joining connection (10) is produced with a tool (33) which has a preferably annular pressing element (34) for forming the press connection (11), and an optionally concentric caulking element (32) for forming the caulking (12), wherein the pressing element (34) and the caulking element (35) can be acted upon with different forces and can be acted upon successively with a time delay with a compressive force or pressing force.

15. Method according to Claim 13 or 14, **characterized in that** first of all the brake shield (9) which is optionally provided with a reinforcing element (23) is plugged with a receiving opening (22) and a wedge profile (14) there onto the supporting pin (8) and the wedge profile (13) thereof from the free pin end in the axial direction, wherein the wedge profiles (13, 14) are brought into an engagement position with one another and are subsequently compressed with a pressing element (34) in the axial direction, preferably until in contact with a support base (7) or another axial support on the supporting pin (8), wherein the caulking (12) is then introduced with a caulking element (35), wherein the caulking element (35) is acted upon with a higher force in order to form the plastic deformation.

## Revendications

1. Ensemble de frein, comprenant un bouclier de frein (9) et un flasque de frein (3) doté d'un tourillon porteur (8), le bouclier de frein (9) et le tourillon porteur (8) étant reliés l'un à l'autre de manière verrouillée en rotation par un assemblage bout à bout (10), de préférence côté circonférence, le tourillon porteur (8) et le bouclier de frein (9) présentant des profils cannelés (13, 14) qui s'emboîtent,
**caractérisé en ce que** l'assemblage bout à bout (10) présente un assemblage à ajustement serré (11) à cet endroit et en outre un matage (12) au niveau de l'assemblage à ajustement serré (11).

2. Ensemble de frein selon la revendication 1, **caractérisé en ce que** les profils cannelés (13, 14) présentent des saillies (15, 16) et des creux (17, 18) s'emboîtant réciproquement avec une composante directionnelle radiale par rapport à l'axe de tourillon.

3. Ensemble de frein selon la revendication 1 ou 2, **caractérisé en ce que** le matage (12) forme au niveau de l'assemblage à ajustement serré (11) un assemblage supplémentaire, de préférence axial, par complémentarité de forme entre le bouclier de frein (9) et le tourillon porteur (8).

4. Ensemble de frein selon la revendication 1, 2 ou 3, **caractérisé en ce que** le matage (12) est disposé au niveau des profils cannelés (13, 14) serrés, dans lequel le matage (12) est disposé au niveau d'un profil cannelé (13, 14) ou des deux profils cannelés (13, 14), et recouvre par complémentarité de forme le profil cannelé (14, 13) respectivement différent.

5. Ensemble de frein selon l'une quelconque des revendications précédentes, **caractérisé en ce que** les profils cannelés (13, 14) qui s'emboîtent présentent des hauteurs différentes dans la direction axiale (32) du tourillon porteur (8), le matage (12) étant disposé au niveau du profil cannelé (13, 14) dépassant axialement en hauteur.

6. Ensemble de frein selon l'une quelconque des revendications précédentes, **caractérisé en ce qu'**un profil cannelé (13) est disposé sur le tourillon porteur (8) et un profil cannelé (14) est disposé au bord d'une ouverture de réception (22), entourant le tourillon porteur (8), du bouclier de frein (9) et éventuellement d'une bague de renforcement (23) à cet endroit.

7. Ensemble de frein selon l'une quelconque des revendications précédentes, **caractérisé en ce que** le matage (12) présente un ou plusieurs points de matage avec respectivement une encoche (19) et éventuellement une projection (20) latérale, en particulier radiale, déplacée.

8. Ensemble de frein selon la revendication 7, **caractérisé en ce que** les points de matage ou encoches (19) se trouvent sur la surface, tournée vers l'extrémité libre du tourillon porteur dans la direction axiale, du profil cannelé (13, 14) déformé plastiquement.

9. Ensemble de frein selon l'une quelconque des revendications précédentes, **caractérisé en ce que** respectivement un point de matage est disposé sur une ou plusieurs saillies (15, 16).

10. Ensemble de frein selon l'une quelconque des revendications précédentes, **caractérisé en ce que** le matage (12) est disposé sur une ou plusieurs saillies (15) et éventuellement aussi sur des creux (17) du tourillon porteur (8).

11. Ensemble de frein selon l'une quelconque des revendications précédentes, **caractérisé en ce que** le flasque de frein (3) présente un socle d'appui élargi (7) sous le tourillon porteur (8) qui constitue un coussinet pour le bouclier de frein (9).

12. Ensemble de frein selon l'une quelconque des revendications précédentes, **caractérisé en ce que** le flasque de frein (3) est réalisé sous la forme d'un levier oscillant de roue (6).

13. Procédé de fabrication d'un ensemble de frein (1) comprenant un bouclier de frein (9) et un flasque de frein (3) doté d'un tourillon porteur (8), le bouclier de frein (9) et le tourillon porteur (8) étant reliés l'un à l'autre de manière verrouillée en rotation par un assemblage bout à bout (10), de préférence côté circonférence, le tourillon porteur (8) et le bouclier de frein (9) présentant des profils cannelés (13, 14) qui s'emboîtent,
**caractérisé en ce que** l'assemblage bout à bout (10) est formé par un assemblage à ajustement serré (11) entre les profils cannelés (13, 14) et de plus par un matage (12) au niveau de l'assemblage à ajustement serré (11).

14. Procédé selon la revendication 13, **caractérisé en ce que** l'assemblage bout à bout (10) est créé à l'aide d'un outil (33) qui présente un élément de serrage (34), de préférence annulaire, pour constituer l'assemblage à ajustement serré (11) et un élément de matage (32), éventuellement concentrique, pour constituer le matage (12), l'élément de serrage (34) et l'élément de matage (35) pouvant être sollicités par différentes forces et pouvant être sollicités l'un après l'autre avec un décalage dans le temps par une force de pression ou une force de serrage.

15. Procédé selon la revendication 13 ou 14, **caractérisé en ce que** d'abord le bouclier de frein (9), éventuellement muni d'un élément de renforcement (23), ayant une ouverture de réception (22) et un profil cannelé (14) à cet endroit est emmanché sur le tourillon porteur (8) et son profil cannelé (13) dans la direction axiale en partant de l'extrémité libre du tourillon, les profils cannelés (13, 14) étant mis dans une position d'emboîtement mutuel et ensuite serrés dans la direction axiale par un élément de serrage (34), de préférence jusqu'en butée contre un socle d'appui (7) ou un autre appui axial sur le tourillon porteur (8), dans lequel le matage (12) est ensuite pratiqué par un élément de matage (35), l'élément de matage (35) étant sollicité par une force supérieure pour réaliser la déformation plastique.
